# DEMANDE DE BREVET EUROPEEN

(11) **EP 1 052 858 A1**
(43) Date de publication de la demande: **15.11.2000**
(21) Numéro de dépôt: 00400834.8
(22) Date de dépôt: 27.03.2000
(51) Int. Cl.: H04Q 3/62

(54) **Etablissement de liens dynamiques dans un réseau de télécommunication privé**

(30) Priorité: 10.05.1999 FR 9905926
(71) Demandeur: ALCATEL, 75008 Paris (FR)
(72) Inventeur: Litteaut, Jacques, 78160 Marly le Roi (FR); Bennai, Lahcen, 95100 Argenteuil (FR)
(74) Mandataire: Sciaux, Edmond

(57) **Abrégé**

L'invention concerne un noeud pour réseau (10) de télécommunication, notamment de type privé, comprenant un grand nombre de noeuds.

Le noeud comporte un nombre de registres de mémoire (M₁, M₂, M₃, ...) sensiblement inférieur au nombre total de noeuds du réseau. Chaque registre de mémoire est destiné à réaliser un lien dynamique (A₁, A₂, A₃) avec un autre noeud du réseau, grâce au chargement de l'adresse du noeud destinataire. Ce chargement est effectué lors de la demande d'établissement d'une connexion avec le noeud destinataire, et le registre est libéré quand aucune communication ne passe plus entre ce noeud et le noeud destinataire.

## Description

L'invention est relative à un réseau de télécommunication, notamment de type privé, ainsi qu'à un noeud pour un tel réseau.

L'élément de base d'un réseau de télécommunication est un noeud, quelquefois appelé autocommutateur, ou PABX.

La fonction d'un noeud d'un système de télécommunications est de diriger les appels provenant d'un abonné vers le noeud auquel est rattaché le destinataire de l'appel et d'établir la communication entre les abonnés, par l'intermédiaire d'un lien entre ce noeud de l'appelant et le noeud du destinataire (appelé).

Il n'est, en général, pas possible d'établir des liens permanents ou statiques entre tous les noeuds. C'est pourquoi des liens, ou artères, sont créés à la demande quand les communications doivent être établies. De telles artères sont dites "dynamiques".

Dans les réseaux de télécommunications connus, chaque noeud comporte une description de tous les liens dynamiques qu'il peut établir avec les autres noeuds, cette description comportant non seulement les adresses, mais aussi les caractéristiques de cette artère, telles que le débit, le nombre de canaux, la nature des signaux à transmettre, etc.

Ces descriptions nécessitent des capacités de mémorisation importantes qui deviennent prohibitives quand le nombre de noeuds du réseau devient élevé, par exemple quand il dépasse le millier. En outre, le chargement des liens dynamiques dans les mémoires des divers noeuds implique aussi un temps de main d'oeuvre important.

L'invention fournit un noeud dans lequel la création d'artères dynamiques nécessite des ressources limitées en mémoire.

A cet effet, le noeud selon l'invention comprend un nombre limité de registres de mémoire, sensiblement inférieur au nombre de noeuds du réseau, de préférence inférieur à 10% du nombre de ces noeuds, chaque registre de mémoire étant destiné à l'établissement d'une artère dynamique et contenant l'adresse du destinataire et les caractéristiques de trafic de cette artère. Chaque registre n'est rempli que lorsqu'un lien doit être établi et est libéré quand aucune communication ne circule sur ce lien.

Dans le mode de réalisation préféré de l'invention, les caractéristiques physiques de trafic sont identiques pour toutes les artères. Dans ces conditions, ces caractéristiques peuvent être préalablement chargées dans chacun des registres.

Ainsi, l'invention tire avantage du fait que, dans chaque noeud, à chaque instant, un nombre limité de liens est établi avec les autres noeuds et qu'il n'est donc pas nécessaire de garder en permanence en mémoire tous les liens possibles.

Le nombre de registres est fonction de la capacité de trafic du noeud, c'est-à-dire, notamment, du nombre d'abonnés qui lui sont connectés et des capacités de trafic de chacun de ces abonnés.

Dans le mode de réalisation préféré de l'invention, le noeud contient en mémoire toutes les adresses, dans le réseau, des autres noeuds et, lors d'une demande d'établissement d'une communication, qui implique la création d'un nouveau lien, l'adresse du noeud destinataire est chargée dans un registre.

Ainsi, on peut charger en mémoire de tous les noeuds du réseau la même information qui est constituée par les adresses de tous les noeuds de ce réseau. En d'autres termes, il n'est pas nécessaire d'individualiser chaque noeud. En outre, les adresses occupent un emplacement mémoire relativement réduit.

Il est à noter que l'invention permet non seulement de limiter les emplacements mémoire nécessaires, mais aussi de limiter le nombre d'entrées/sorties, celui-ci étant égal au nombre de registres.

L'invention permet de réaliser des noeuds à moindre coût et aussi de les configurer aisément et rapidement, même pour un réseau comportant plusieurs milliers, ou davantage, de noeuds.

La présente invention prévoit un noeud pour réseau de télécommunication, notamment de type privé, comportant un nombre de registres de mémoire sensiblement inférieur au nombre total de noeuds du réseau, chaque registre de mémoire étant destiné à réaliser un lien dynamique avec un autre noeud du réseau, grâce au chargement de l'adresse du noeud destinataire, ce chargement étant effectué lors de la demande d'établissement d'une connexion avec le noeud destinataire, et le registre étant libérable quand aucune communication ne passe plus entre ce noeud et le noeud destinataire.

Selon un mode de réalisation, le nombre de registres est inférieur à 10% du nombre total de noeuds du réseau.

Selon un mode de réalisation, le noeud comporte en mémoire toutes les adresses des autres noeuds du réseau.

Selon un mode de réalisation, chaque registre constitue un emplacement banalisé d'une mémoire.

Selon un mode de réalisation, chaque registre est préchargé avec les paramètres physiques des liens à établir.

Selon un mode de réalisation, lesdits paramètres sont les mêmes pour tous les registres.

La présente invention prévoit en outre une application du noeud à un réseau comportant au moins 500 noeuds de ce type.

La présente invention prévoit aussi un réseau, caractérisé en ce que le nombre de registres mémoire de chaque noeud dépend du trafic qu'il est prévu de faire passer par ce noeud.

Enfin, la présente invention prévoit un procédé pour établir un lien dynamique entre deux noeuds d'un réseau de télécommunication, chaque noeud comportant une pluralité de registres mémoire et, lors de la demande de lien, un registre est chargé avec l'adresse de l'autre noeud, ce registre étant libérable quand aucune communication ne transite par le lien.

Selon un mode de réalisation, chaque noeud comporte en mémoire les adresses de tous les noeuds du réseau.

Selon un mode de réalisation, les paramètres physiques sont les mêmes pour tous les liens et ils sont préchargés dans chaque registre.

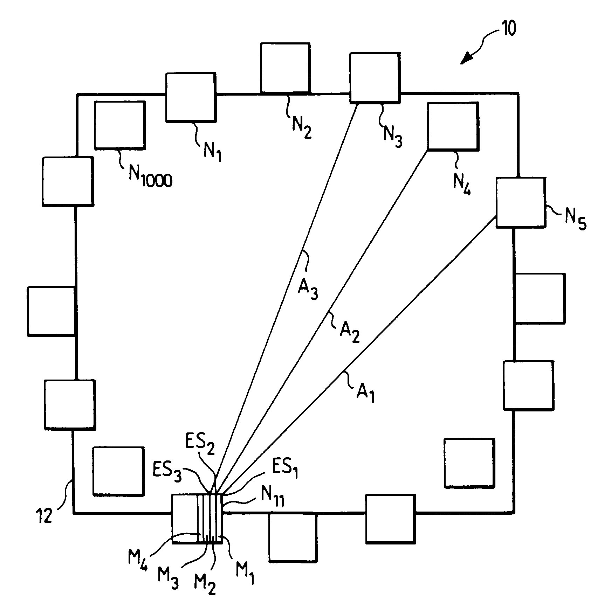

D'autres caractéristiques et avantages de l'invention apparaîtront avec la description de certains de ses modes de réalisation, celle-ci étant effectuée en se référant au dessin ci-annexé sur lequel la figure unique est un schéma simplifié d'un réseau conforme à l'invention.

Dans le réseau 10 représenté sur la figure, on prévoit des noeuds N₁, N₂, N₁₀₀₀, etc. Ce réseau est par exemple du type IP et/ou du type X25 et/ou ISDN commuté.

A chaque noeud sont affectés un certain nombre, par exemple trente, d'abonnés et chacun des noeuds comporte un nombre limité d'entrées/sorties, ce nombre étant nettement inférieur au nombre d'autres noeuds du réseau. En d'autres termes, le nombre de liens dynamiques qu'il est possible d'établir simultanément avec les autres noeuds est limité par ce nombre d'entrées/sorties.

Sur la figure, on a représenté en traits épais 12 les liens statiques et en traits fins, A₁, A₂, A₃, les liens dynamiques.

Chaque noeud comporte en mémoire toutes les adresses des autres noeuds du réseau. De préférence, pour simplifier le chargement des mémoires des noeuds, chacun de ceux-ci comprend l'ensemble des adresses des noeuds du réseau, y compris l'adresse du noeud ainsi chargé. Ainsi, on peut télécharger dans tous les noeuds la même information formée de l'ensemble des adresses des noeuds.

Par ailleurs, chaque noeud comporte un registre mémoire (constituant par exemple un emplacement de mémoire) pour chaque entrée/sortie ES₁, ES₂, ES₃, etc. Les emplacements mémoire ont été représentés par des blocs symboliques M₁, M₂, etc. dans le noeud N₁₁.

Chaque noeud comporte, en outre, des moyens logiciels (non montrés) pour charger un registre ou un emplacement mémoire disponible quand, à réception d'un appel provenant du noeud ou d'un autre noeud, une communication est demandée. Dans ce cas, les moyens logiciels chargent le registre disponible avec l'adresse du noeud appelant ou du noeud destinataire. Chaque registre est également préchargé avec les paramètres de fonctionnement, de niveau 2, des artères à établir. Ces paramètres, bien connus, sont notamment les caractéristiques des trames, leurs espacements, le débit, etc. Ils sont les mêmes dans tous les registres.

Chaque artère, par exemple A₁, constitue un lien dynamique permettant d'établir plusieurs communications à la fois, c'est-à-dire que même si la communication a été demandée par un abonné X du noeud N₁₁, pour communiquer avec un abonné Y du noeud N₅, d'autres abonnées X', X", etc. du noeud N₁₁ peuvent également communiquer avec des abonnés Y', Y", etc. du noeud N₅ par la même artère A₁.

Cette artère dynamique A₁ est maintenue tant qu'elle supporte des communications. Par contre, lorsqu'il n'y a plus de communication passant par l'artère A₁, le registre correspondant du noeud N₁₁ est libéré pour permettre l'établissement d'un lien dynamique avec un autre noeud.

Ainsi, la réalisation et la gestion d'un noeud et d'un réseau conformes à l'invention sont particulièrement simples et peu onéreuses.

## Revendications

1. Noeud pour réseau de télécommunication, notamment de type privé, caractérisé en ce qu'il comporte un nombre de registres de mémoire (M₁, M₂, M₃, ...) sensiblement inférieur au nombre total de noeuds du réseau, chaque registre de mémoire étant destiné à réaliser un lien dynamique (A₁, A₂, A₃) avec un autre noeud du réseau, grâce au chargement de l'adresse du noeud destinataire, ce chargement étant effectué lors de la demande d'établissement d'une connexion avec le noeud destinataire, et le registre étant libérable quand aucune communication ne passe plus entre ce noeud et le noeud destinataire.

2. Noeud selon la revendication 1, caractérisé en ce que le nombre de registres est inférieur à 10% du nombre total de noeuds du réseau.

3. Noeud selon la revendication 1 ou 2, caractérisé en ce qu'il comporte en mémoire toutes les adresses des autres noeuds du réseau.

4. Noeud selon l'une quelconque des revendications précédentes, caractérisé en ce que chaque registre constitue un emplacement banalisé d'une mémoire.

5. Noeud selon l'une quelconque des revendications précédentes, caractérisé en ce que chaque registre est préchargé avec les paramètres physiques des liens à établir.

6. Noeud selon la revendication 5, caractérisé en ce que lesdits paramètres sont les mêmes pour tous les registres.

7. Application du noeud selon l'une quelconque des revendications 1 à 6 à un réseau comportant au moins 500 noeuds de ce type.

8. Réseau selon la revendication 7, caractérisé en ce que le nombre de registres mémoire de chaque noeud dépend du trafic qu'il est prévu de faire passer par ce noeud.

9. Procédé pour établir un lien dynamique entre deux noeuds d'un réseau de télécommunication, caractérisé en ce que chaque noeud comporte une pluralité de registres mémoire et en ce que, lors de la demande de lien, un registre est chargé avec l'adresse de l'autre noeud, ce registre étant libérable quand aucune communication ne transite par le lien.

10. Procédé selon la revendication 9, caractérisé en ce que chaque noeud comporte en mémoire les adresses de tous les noeuds du réseau.

11. Procédé selon la revendication 9 ou 10, caractérisé en ce que les paramètres physiques étant les mêmes pour tous les liens et ils sont préchargés dans chaque registre.
